(19)

Europäisches
Patentamt
European
Patent Office
Office européen
des brevets

(11) **EP 2 469 472 A1**

(12) **EUROPEAN PATENT APPLICATION**
published in accordance with Art. 153(4) EPC

(43) Date of publication:
   **27.06.2012 Bulletin 2012/26**

(51) Int Cl.:
   ***G06T 11/00*** *(2006.01)*

(21) Application number: **11743411.8**

(86) International application number:
   **PCT/CN2011/000830**

(22) Date of filing: **11.05.2011**

(87) International publication number:
   **WO 2012/055147 (03.05.2012 Gazette 2012/18)**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**

(30) Priority: **28.10.2010 CN 201010529974**

(71) Applicants:
   • **Tsinghua University
     Beijing 100084 (CN)**
   • **Nuctech Company Limited
     Tongfang Building,
     Shuangqinglu
     Haidian District,
     Beijing 100084 (CN)**

(72) Inventors:
   • **LI, Liang
     Beijing 100084 (CN)**

   • **CHEN, Zhiqlang
     Beijing 100084 (CN)**
   • **ZHANG, Li
     Beijing 100084 (CN)**
   • **KANG, Kejun
     Beijing 100084 (CN)**
   • **XING, Yuxiang
     Beijing 100084 (CN)**
   • **ZHAO, Ziran
     Beijing 100084 (CN)**
   • **XIAO, Yongshun
     Beijing 100084 (CN)**
   • **HUANG, Zhifeng
     Beijing 100084 (CN)**

(74) Representative: **Epping - Hermann - Fischer
   Patentanwaltsgesellschaft mbH
   Ridlerstrasse 55
   80339 München (DE)**

(54) **COMPUTED TOMOGRAPHY (CT) IMAGE RECONSTRUCTION METHOD AND APPARATUS**

(57)     The invention discloses a method and apparatus for CT image reconstruction. The method for CT image reconstruction of the present invention comprises the steps of: selecting projection data of the same height on a curve having a curvature approximate to that of the scanning circular orbit; implementing weighting processing on the selected projection data; filtering the weighting processed projection data along the horizontal direction; implementing three-dimensional back projection on the filtered projection data along the direction of ray. The apparatus for CT image reconstruction of the present invention comprises a rebinning unit, a weighting unit, a filtering unit and a back projection unit. Employment of the technical solution of the invention can effectively eliminate cone beam artifact under a large cone angle.

1) selecting project data of the same heigh on the curve having curvature approximate to that of the scanning circular orbit

2) implementing weighting processing on the selected projection data

3) filtering the weighting processed projection data along the horizontal direction

4) implementing three-dimensional back projection on the filtered projection data along the direction of ray

Fig. 4

## Description

### Technical field

The invention generally relates to technical fields of CT image, and particularly relates to a method and apparatus for CT image reconstruction.

### Background Art

Since Hounsfield invents the first CT machine in 1972, the CT technology has brought revolutionary influence to medical diagnosis and industrial non-destructive detecting. CT has become one of the important detecting means for industries of medical treatment, biology, aeronautics and astronautics, national defense and so forth. With the improvement of the technology, CT scanning mode and imaging method have been continually improved, three-dimensional cone-beam CT has become the mainstream of research and application. X-ray cone-beam CT has been broadly applied in fields of clinical medicine, security inspection, non-destructive detecting and so forth. In particular, because the cone-beam CT system based on circular orbit scanning is comparatively simple in respects of mechanics, electronic control and so forth, and is easy for engineering realization, it is very broadly applied in clinical medicine, security inspection and industrial non-destructive detecting. In circular-orbit cone-beam reconstruction methods, the most broadly applied method is FDK method proposed by Feldkamp et al. (Feldkamp L.A., L.C.Davis, and J.W.Kress. Practical cone-beam algorithm [J]. Journal of the Optical Society of America, 1984, (1): 612-619.).

FDK method can be deemed as an approximate expansion to fan-beam FBP (Filtered Backprojection) method under three-dimensional condition. The FDK method comprises the following steps: firstly implementing weighting processing on projection data; then implementing one-dimensional filtering on the projection data of different projection angles in the horizontal direction; lastly implementing three-dimensional back projection along the direction reverse to the X-ray to obtain a last three-dimensional reconstructed image of the object.

Thus it can be seen that the reconstructed values of voxel of the FDK method are based on the sum of the contribution of radiation passing through the voxel in the projection angle range of 360 degree, accordingly, the circular-orbit cone-beam FDK method, as an approximate method, has the characteristics where the mathematical formula is simple and the method computation is fast, and it is easy for engineering realization, moreover, when the cone angle is comparatively small (generally within $\pm 5°$), it can achieve very nice reconstruction effect, thus it is broadly appreciated in practical engineering application.

However, FDK method also has certain problems: because the circular orbit scanning per se does not satisfy the condition of data completeness for cone-beam precise reconstruction, there exists the problem of Radon data loss; thus, when the cone angle of the cone beam increases, the resulting image reconstructed by FDK method will exist serious cone beam artifact, FDK reconstruction value will decrease fast in a plane far away from the scanning orbit, such that the method is greatly limited in application in a CT imaging system having a flat panel detector.

In order to improve the quality of image reconstruction of circular-orbit FDK method under a large cone angle, based on the FDK method, a plurality of improved FDK methods are proposed, for example, P-FDK (parallel FDK), T-FDK (tent-FDK), HT-FDK (hybrid tent-FDK), EFDK (extended FDK) and so forth. In these improved FDK methods, because P-FDK and T-FDK is simple and can be easily implemented in engineering, they are comparatively broadly applied, said two methods will be introduced briefly below.

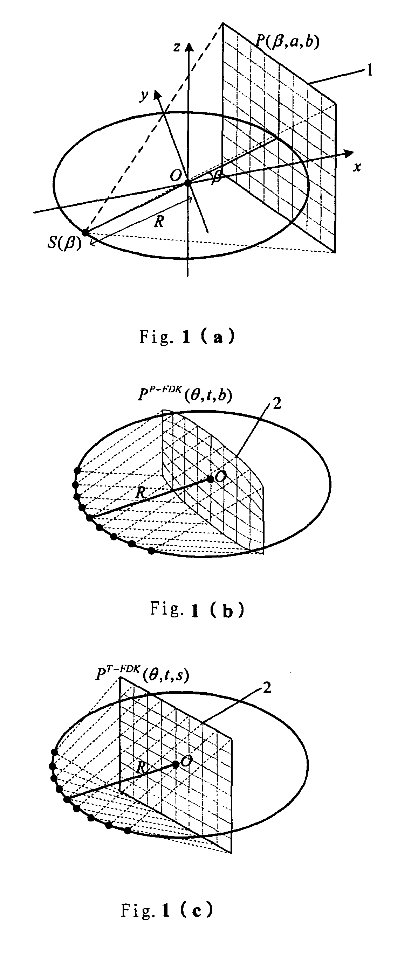

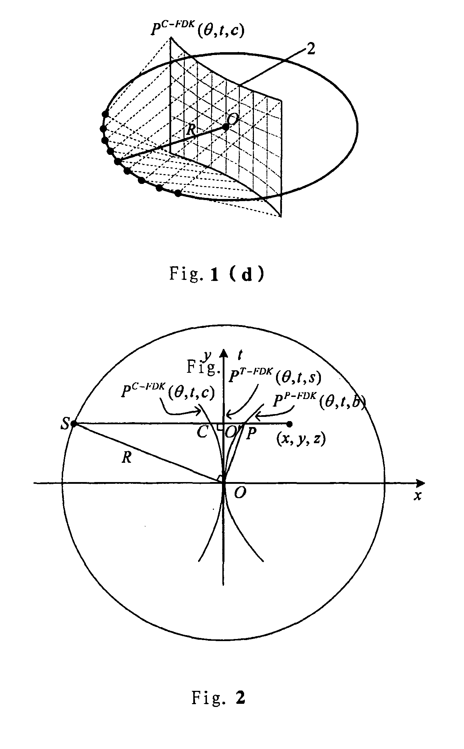

P-FDK method is to obtain parallel fan-beam projection data by rebinning cone-beam projection data, and then reconstructing a three-dimensional image of object through Filtered Backprojection Method. As shown in Fig. 1 (a), which is a schematic diagram scanned by a circular-orbit cone-beam CT system using a flat panel detector, $S(\beta)$ indicates the location of the X-ray source on the circular orbit, $\beta$ indicates the angular sampling location of projection on the circular orbit, $P(\beta,a,b)$ indicates the projection data on the flat panel detector, $(a,b)$ is a rectangular coordinate system defined on the flat panel detector for indicating the location coordinates of each X-ray projected on the detector, R is the radius of the circular orbit; Fig. (b) is to rebin cone-beam projection into fan-beam projection of parallel beams using P-FDK method, the black solid dot is the X-ray source, on a central virtual detector, in regard of the rebinned projection data, because the distances from the parallel fan beams to the virtual detector under the same angle are different, a row of projection on the original flat panel detector are not horizontal on the corresponding virtual detector any more, instead, they are on a curve convex along the central row of the virtual detector. Taking the flat panel detector as an example, the data rebinning formula of P-FDK is as formula (1).The subsequent derivation processes of the present invention also take the flat panel detector as an example, other types of detectors, such as cylindrical surface detector and etc., can be obtained by making corresponding changes based on the flat panel detector and here we will not go further on them.

$$P^{P-FDK}(\theta,t,b) = P(\theta - \arcsin\frac{t}{R}, \frac{tR}{\sqrt{R^2-t^2}}, b) \qquad (1)$$

wherein θ indicates the sampling location of the rebinned projection data in angular direction after rebinning by P-FDK, (t,b) is the rectangular coordinate system on the central virtual detector after the rebinning, indicating the location coordinates of each X-ray on the virtual detector after the rebinning.

P-FDK method differs from FDK method only in that the P-FDK method is firstly to rebin into parallel fan-beams such that the process of calculating weighting coefficient is omitted during back projection, while the method is not different from FDK method in image quality. Being different from P-FDK, T-FDK method proposed by Grass et al. in 2000 is improved based on T-FDK method, T-FDK further is to rebin for a second time in vertical fan-beam plane, in addition to rebinning the cone-beam projection into parallel fan beams, that is, T-FDK needs to rebin projection data in the two directions of horizontal and vertical, ultimately causing the difference of T-FDK from P-FDK to be in that the direction of filtering the projection data according to T-FDK is along the horizontal direction of the central virtual detector, which is as shown in Fig. 1 (c), rather than along the convex curve direction. The data rebinning formula of T-FDK method is as follows:

$$P^{T-FDK}(\theta,t,s) = P(\theta - \arcsin\frac{t}{R}, \frac{tR}{\sqrt{R^2-t^2}}, \frac{sR^2}{R^2-t^2}) \qquad (2)$$

wherein θ indicates the sampling location of the rebinned projection data in angular direction after rebinning according to T-FDK, (t,s) is the rectangular coordinate system on the central virtual detector after the rebinning according to T-FDK, indicating the location coordinates of each X-ray on the virtual detector after the rebinning.

T-FDK, compared to FDK, in one respect, is similar to P-FDK in that it is to rebin into parallel fan beams such that the weighting coefficient during back projection is omitted, and thus is more efficient in calculation respect; meanwhile, because the filtering of projection data according to T-FDK method is implemented along the horizontal direction of the central virtual detector, it reduces cone beam artifact induced by increase of cone angle and improves image reconstruction quality, such that it is possible to realize accurate three-dimensional imaging of large object using a large-area flat panel detector through circular-orbit scanning. Besides, there is another thought of improving FDK method which uses conjugate rays in circular-orbit scanning projection, different back projection weighting coefficients are selected for conjugate projection so as to improve the quality of the reconstructed image, and comparatively good effect is also achieved.

With the gradual popularization of the flat panel detector, there are more and more new types of cone-beam CT systems using large-area flat panel detector, and the requirement for large-cone-angle circular-orbit cone-beam CT image reconstruction method is even higher. Taking the dental cone-beam CT apparatus which is comparatively broadly applied in dental disease diagnosis at present as an example, three-dimensional dental CT of a plurality of manufacturers at present use flat panel detector of 20cm×25cm, the distance from the X-ray source to the detector is supposed to be 70cm, here the size of the cone angle corresponding to the circular orbit scanning is ±8.13˚, because doctors make disease diagnosis mainly dependent on CT value of image, i.e. pixel value of the reconstructed image, the requirement for reconstruction value of image from the medical-use CT is very high; such large-cone-angle circular-orbit scanning goes far away beyond the scope in which reconstruction can be done according to FDK method, and the reconstruction result according to T-FDK method is also unsatisfactory.

Moreover, with the rapid development of the detector technology, detectors having even larger-area flat panel have been applied in clinical use, for example, flat panel detectors of different sizes of 30cmx4Ocm, 43cmx43cm etc. have been applied in clinical DR (Digital Radiography System). These detectors of even larger area can greatly improve the effective detection area of cone-beam X-ray, enlarge field of view of imaging, and most importantly, can reduce or even eliminate the problem where the CT value is unable to make accurate reconstruction due to truncation of cone-beam projection data; therefore, large-area flat-panel detector can be very broadly applied in current and future three-dimensional CT image apparatus. However, with increase of the area of the flat panel detector, the cone angle of the three-dimensional CT system correspondingly increases, how to eliminate serious cone beam artifact under a large cone angle has become a difficult problem which has to be solved.

**Summary of the Invention**

The main technical problem to be solved by the invention is to provide a method and apparatus for CT image reconstruction that can eliminate serious cone beam artifact under a large cone angle.

In order to solve the above-mentioned problem, the technical solution of the method for CT image reconstruction of the present invention comprises the steps of:

> selecting projection data of the same height on a curve having a curvature approximate to that of the scanning circular orbit;
> implementing weighting processing on the selected projection data; filtering the weighting processed projection data along the horizontal direction;
> implementing three-dimensional back projection on the filtered projection data along the direction of ray.

Said step of selecting projection data of the same height on a curve having a curvature approximate to that of the scanning circular orbit comprises selecting projection data according to the following formula:

$$P^{C-FDK}(\theta,t,c) = P(\theta - \arcsin\frac{t}{R}, \frac{tR}{\sqrt{R^2-t^2}}, \frac{c \cdot R^2}{2(R^2-t^2)-R\sqrt{R^2-t^2}})$$

wherein, $P^{C-FDK}(\theta,t,c)$ indicates the selected projection data; $\theta$ indicates the projection direction; $t$ indicates the distance between parallel fan beams; $c$ indicates the angular sampling interval in the direction of Z axis; R indicates the radius of the circular orbit.

Said step of implementing weighting processing on the selected projection data comprises processing the selected projection data according to the following formula:

$$\tilde{P}^{C-FDK}(\theta,t,c) = \frac{2\sqrt{R^2-t^2}-R}{\sqrt{5R^2-4t^2-4R\sqrt{R^2-t^2}+c^2}} \cdot P^{C-FDK}(\theta,t,c)$$

wherein, $\tilde{P}^{C-FDK}(\theta,t,c)$ indicates the weighting processed projection data .

Said step of filtering the weighting processed projection data along the horizontal direction comprises filtering according to the following formula:

$$g^{C-FDK}(\theta,t,c) = \tilde{P}^{C-FDK}(\theta,t,c) \otimes h(t)$$

$$= \int_{-c_0}^{c_0} \tilde{P}^{C-FDK}(\theta,t,c) \cdot h(t-t')dt'$$

wherein, $g^{C-FDK}(\theta,t,c)$ indicates the filtered projection data; $\otimes$ indicates the convolution; $h(t)$ indicates the filtering function.

Said step of implementing three-dimensional back projection on the filtered projection data along the direction of ray comprises implementing three-dimensional back projection according to the following formula:

$$f^{C-FDK}(x,y,z) = \int_0^{2\pi} g^{C-FDK}\big(\theta, t(x,y,\theta), c(x,y,z,\theta)\big)d\theta$$

wherein, $f^{C-FDK}(x, y, z)$ indicates the reconstructed image in the direction of X axis, Y axis and Z axis.

Correspondingly, the technical solution of the apparatus for CT image reconstruction of the present invention comprises:

rebinning unit configured for selecting projection data of the same height on a curve having a curvature approximate to that of the scanning circular orbit;
weighting unit configured for implementing weighting processing on the selected projection data;
filtering unit configured for filtering the weighting processed projection data along the horizontal direction;
back projection unit configured for implementing three-dimensional back projection on the filtered projection data along the direction of ray.

Said rebinning unit is configured to select projection data according to the following formula:

$$P^{C-FDK}(\theta,t,c) = P(\theta - \arcsin\frac{t}{R}, \frac{tR}{\sqrt{R^2 - t^2}}, \frac{c \cdot R^2}{2(R^2 - t^2) - R\sqrt{R^2 - t^2}})$$

wherein, $P^{C-FDK}(\theta,t,c)$ indicates the selected projection data; $\theta$ indicates the projection direction; $t$ indicates the distance between parallel fan beams; $c$ indicates the angular sampling interval in the direction of Z axis; R indicates the radius of the circular orbit.
Said weighting unit is configured to process the selected projection data according to the following formula:

$$\tilde{P}^{C-FDK}(\theta,t,c) = \frac{2\sqrt{R^2 - t^2} - R}{\sqrt{5R^2 - 4t^2 - 4R\sqrt{R^2 - t^2} + c^2}} \cdot P^{C-FDK}(\theta,t,c)$$

wherein, $\tilde{P}^{c-FDK}(\theta,t,c)$ indicates the weighting processed projection data.
Said filtering unit is configured to implement one-dimensional ramp filtering according to the following formula:

$$g^{C-FDK}(\theta,t,c) = \tilde{P}^{C-FDK}(\theta,t,c) \otimes h(t)$$
$$= \int_{-c_0}^{c_0} \tilde{P}^{C-FDK}(\theta,t,c) \cdot h(t - t')dt'$$

wherein, $g^{C-FDK}(\theta,t,c)$ indicates the filtered projection data; $\otimes$ indicates the convolution; $h(t)$ indicates the filtering function.
Said back projection unit is configured to implement three-dimensional back projection according to the following formula:

$$f^{C-FDK}(x, y, z) = \int_0^{2\pi} g^{C-FDK}\left(\theta, t(x, y, \theta), c(x, y, z, \theta)\right)d\theta$$

wherein, $f^{C-FDK}(x, y, z)$ indicates the reconstructed image in the direction of X axis, Y axis and Z axis.
Compared to the prior art, the beneficial effect of the method and apparatus for CT image reconstruction of the present invention is as follows:

firstly, the rebinning projection data of the present invention selects projection data of the same height on a curve having a curvature approximate to that of the scanning circular orbit, whereby implements sampling on a curve concave to the central row along the virtual central detector in the fan-beam plane parallel to the Z-axis, such that the numerical value accuracy of the reconstruction method under a large cone angle is greatly improved, cone angle artifact due to a large cone angle is effectively inhibited.

In addition, the present invention is efficient in implementation and has strong stability.

## Brief Description of the Drawings

In order to understand the disclosed content more thoroughly, references is made to the following description, taken in combination with the figures, wherein:

Fig. 1(a) is a schematic diagram of flat-panel-detector circular-orbit cone-beam CT scanning;
Fig. 1(b) is a schematic diagram after rebinning projection data obtained by Fig. 1(a) using P-FDK method;
Fig. 1(c) is a schematic diagram after rebinning projection data obtained by Fig. 1(a) using T-FDK method;
Fig. 1(d) is a schematic diagram after rebinning projection data obtained by Fig. 1(a) using the method for CT image reconstruction of the present invention;
Fig. 2 is a top view of Figs. 1(a), 1(b), 1(c) and 1(d) along the rotation axis, i.e. Z axis;
Fig. 3 is a side view of the vertical section of Fig. 2 passing through SC;
Fig. 4 is a flow diagram of the method for CT image reconstruction of the present invention;
Fig. 5(a) illustrates projection data acquired by circular-orbit CT scanning, which is a sinusoidal chart composed of data of the central layer of a flat panel detector under individual angles;
Fig. 5(b) is a sinusoidal chart composed of data of the central layer of a virtual detector under individual angles after project data is rebinned according to the C-FDK method of the present invention;
Fig. 5(c) is a schematic diagram of projection data obtained after implementing weighting processing on the projection data shown in Fig. 5(b);
Fig. 6(a) is a schematic diagram of an accurate image of a three-dimensional Shepp-logan head model in a vertical section;
Fig. 6(b) is a schematic diagram of reconstruction result obtained using FDK method;
Fig. 6(c) is a schematic diagram of reconstruction result obtained using T-FDK method;
Fig. 6(d) is a schematic diagram of reconstruction result obtained using C-FDK method of the present invention;
Fig. 7 is a schematic diagram of reconstruction result after selecting a section line along the vertical center of sections of Fig. 6(a), 6(b), 6(c) and 6(d);
Fig. 8 is a schematic diagram of the apparatus for CT image reconstruction of the present invention.

## Best Modes for Carrying Out the Invention

Embodiments of the invention will be described in detail below, however the invention is not limited to the following embodiments.

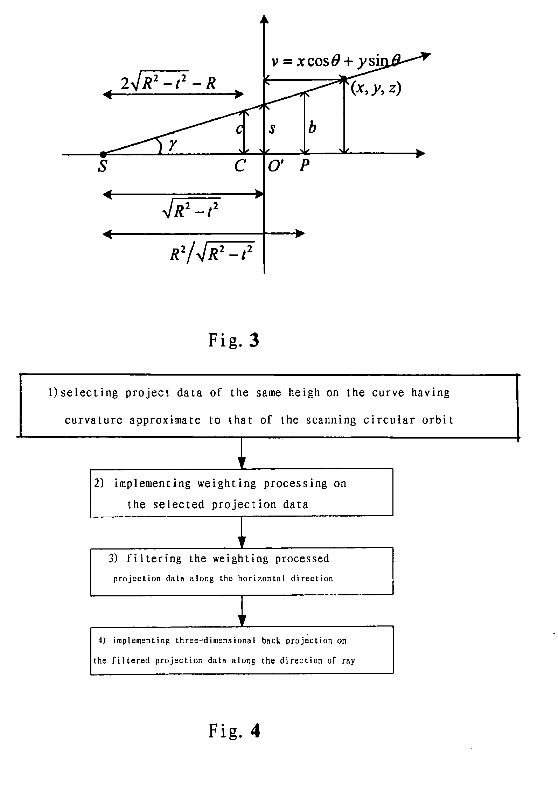

As shown in Fig. 4, the method for CT image reconstruction of the present invention comprises the steps of:

1) selecting projection data of the same height on a curve having a curvature approximate to that of the scanning circular orbit;
2) implementing weighting processing on the selected projection data;
3) filtering the weighting processed projection data along the horizontal direction;
4) implementing three-dimensional back projection on the filtered projection data along the direction of ray.

As seen from the above, the rebinning mode of the method for CT image reconstruction of the present invention is selecting projection data of the same height on a curve having a curvature approximate to that of the scanning circular orbit, then implementing weighting processing on the selected projection data, thereafter filtering the weighting processed projection data along the horizontal direction, lastly implementing three-dimensional back projection on the filtered projection data along the direction of ray, whereby a three-dimensional CT image of the scanned object can be obtained.

For the curvature approximate to that of the scanning orbit, supposing that the curvature of the scanning circular orbit is 1/R, the approximate average curvature range may be 1/2R-2R. For the filtering, any filtering method available to those skilled in the art may be employed, for example, the filter kernel may be a most fundamental ramp filter kernel, and also may be a filter kernel obtained from the standard ramp filtering that has been implemented with smoothing processing in the frequency domain, for example, the commonly used S-L filter kernel and etc. (S-L filter kernel is proposed by L.A.Shepp and B.F.Logan in 1974).

The technical solution of the present invention is described with flat panel detector as an example in the present description. Of course, the present invention may be applied to other panel detectors such as cylindrical detector and so forth.

As shown in Fig. 1 (a), firstly, defining the scanning path of the cone-beam X-ray source in a plane as a circle $\vec{S}(\beta) = R(\cos\beta, \sin\beta)$; R is the radius of the circular orbit; $\beta$ indicates angle parameter corresponding to the point of the ray source point; O is the origin of coordinates and the center of the circular orbit, i.e., the rotation center. $P(\beta,a,b)$ indicates projection data acquired on flat panel detector 1 after X-ray irradiates the scanned object, wherein $(a,b)$ indicates horizontal and vertical coordinates of the location of certain projection point on the two-dimensional flat panel detector 1.

According to the characteristics of P-FDK method, after rebinning cone-beam projection data, the method selects projection data on a convex curve on a central virtual detector 2, as shown in Fig. 1(b). Next, please see Fig. 2, which is a top view from top to bottom along the rotation axis, i.e. Z axis, here the panel detectors turn into a straight line or a curve, the solid dot S on the circular orbit indicates the X-ray source. In Fig. 2, the process of rebinning data according to P-FDK method may be regarded as combining projection data of the same height on the curve in Fig. 2 that pass through *OP,* then, data of P-FDK, that is, the result of formula (1), is obtained, wherein *OP* curve is a curve defined by rebinning formula (1) of P-FDK. While the process of rebinning data according to T-FDK method may be regarded as combining projection data of the same height on the straight line in Fig. 2 that pass through *OO',* then, data of T-FDK, that is, the result of formula (2), is obtained, wherein *OO'* curve is a curve defined by rebinning formula (2) of T-FDK.

While the process of data rebinning of method for the CT image reconstruction of the present invention (referred to as C-FDK for shortness) may be regarded as combining projection data of the same height on the curve in Fig. 2 that pass through *OC ,* then, data of C-FDK is obtained, in this embodiment, *OC* curve is a segment of arc with R as the radius, that is, it is a segment of arc line having the same curvature as the scanning circular orbit, and the center of the curvature of *OC* curve is on a straight line that passes through point *O* and is parallel to *SC.* Of course, the curvature of *OC* curve may be not accurately equal to that of the scanning circular orbit, it may be within the range of 50% to 200% of the curvature of the circular orbit, that is, projection data within this range can also achieve the effect approximate to the present invention.

The rebinning of projection data by the C-FDK method of the present invention is complished in the two directions of horizontal and vertical of the central virtual detector, it is the same as P-FDK and T-FDK in the horizontal direction; while in the vertical direction, as shown in Fig. 3, for the rebinned data:

$$c = \frac{SC}{SP} \cdot b = \frac{2\sqrt{R^2 - t^2} - R}{R^2 / \sqrt{R^2 - t^2}} \cdot b = \frac{2(R^2 - t^2) - R\sqrt{R^2 - t^2}}{R^2} \cdot b \qquad (3)$$

wherein, *c* indicates the coordinate of the central virtual detector in the vertical direction after the rebinning by C-FDK method, *S* indicates the location of the intersection point at which the X-ray intersects the orbit, said X-ray having an angle θ , and the distance from said X-ray to the central ray is *t,* thus, *SC* indicates the distance from the point of the X-ray source located at *S* to curve *OC* along said X-ray. *SP* indicates the distance from the point of the X-ray source located at S to curve *OP* along said X-ray.

Fig. 3 is a vertical section passing through *SC* in Fig. 2, wherein, the line with an angle γ to the axis on which *SC* is present is X-ray. According to the definition of the *OC* arc line in Fig. 2, the lengths of *SC , SP* in Fig. 3 both can be obtained through calculation of spatial and geometric relations, the specific lengths thereof are as follows:

$$SO' = \sqrt{R^2 - t^2} \qquad (4)$$

$$SP = R^2 / \sqrt{R^2 - t^2} \qquad (5)$$

$$SC = 2\sqrt{R^2 - t^2} - R \qquad (6)$$

Thus, the formula of rebinning the circular-orbit cone-beam CT projection data in C-FDK method of the present invention is as follows:

$$P^{C-FDK}(\theta,t,c) = P(\theta - \arcsin\frac{t}{R}, \frac{tR}{\sqrt{R^2-t^2}}, \frac{c \cdot R^2}{2(R^2-t^2) - R\sqrt{R^2-t^2}}) \quad (7)$$

wherein, $\theta$ indicates the projection direction, $t$ indicates the distance between parallel fan beams, $c$ indicates the angular sampling interval in the direction of Z axis.

After rebinning data by C-FDK method using the above formula (7), the next step is implementing weighting processing on the projection data, the weighting coefficient may be $\cos\gamma$, wherein $\gamma$ is the angle between each X-ray and the projection line on the central plane projected by said X-ray along the direction of Z axis, as shown in Fig. 3, according to the spatial and geometric relations:

$$\cos\gamma = \frac{SC}{\sqrt{SC^2+c^2}} = \frac{2\sqrt{R^2-t^2}-R}{\sqrt{5R^2-4t^2-4R\sqrt{R^2-t^2}+c^2}} \quad (8)$$

That is, the formula of implementing weighting processing on the projection is:

$$\tilde{P}^{C-FDK}(\theta,t,c) = \frac{2\sqrt{R^2-t^2}-R}{\sqrt{5R^2-4t^2-4R\sqrt{R^2-t^2}+c^2}} \cdot P^{C-FDK}(\theta,t,c) \quad (9)$$

then, implementing one-dimensional ramp filtering on the above-processed projection data along the horizontal direction:

$$g^{C-FDK}(\theta,t,c) = \tilde{P}^{C-FDK}(\theta,t,c) \otimes h(t)$$
$$= \int_{-c_0}^{c_0} \tilde{P}^{C-FDK}(\theta,t,c) \cdot h(t-t')dt' \quad (10)$$

In the formula above, $\otimes$ indicates convolution, and $h(t)$ is filtering function, generally a Ramp filter is employed.
Lastly, implementing three-dimensional back projection on the filtered projection data along the direction of ray, whereby a three-dimensional CT image of the scanned object can be reconstructed, the back projection formula is as follows:

$$f^{C-FDK}(x,y,z) = \int_0^{2\pi} g^{C-FDK}(\theta, t(x,y,\theta), c(x,y,z,\theta))d\theta \quad (11)$$

wherein, the calculation formula of the projection location on the detector is as follows:

$$t(x,y,\theta) = y\cos\theta - x\sin\theta \quad (12)$$

$$c(x,y,z,\theta) = \frac{z \cdot (2\sqrt{R^2 - t^2} - R)}{\sqrt{R^2 - t^2} + x\cos\theta + y\sin\theta} \qquad (13)$$

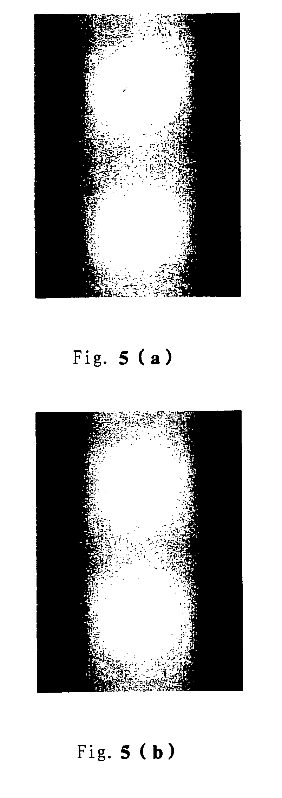

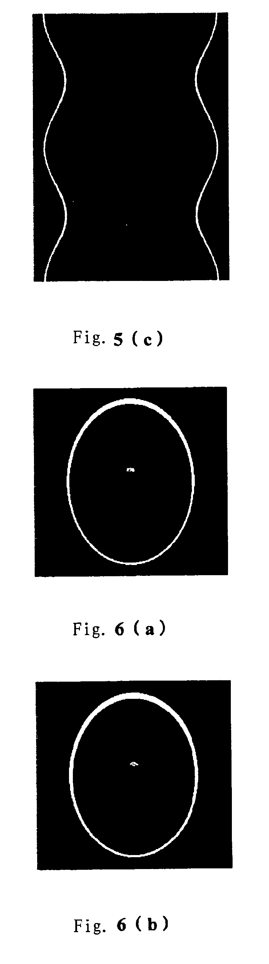

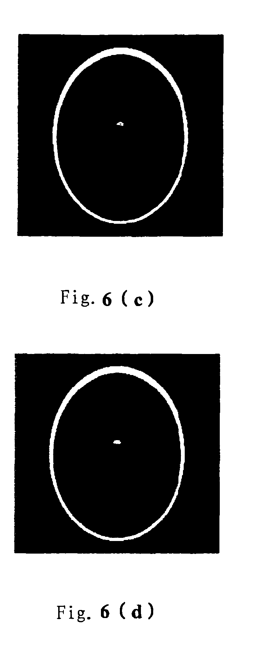

As shown in Fig. 5(a), it shows projection data acquired by circular-orbit CT scanning, which is a sinusoidal chart composed of data of the central layer of the flat panel detector under individual angles; while Fig. 5(b) is a sinusoidal chart composed of data of the central layer of a virtual detector under individual angles after projection data is rebinned by C-FDK method of the present invention; Fig. 5(c) is projection data obtained after implementing weighting processing on the projection data shown in Fig. 5(b). Then, one-dimensional ramp filtering is implemented on the projection data that has been implemented with weighting processing, lastly, back projection is implemented, whereby a CT image of the scanned object can be obtained, as shown in Fig. 6(d).

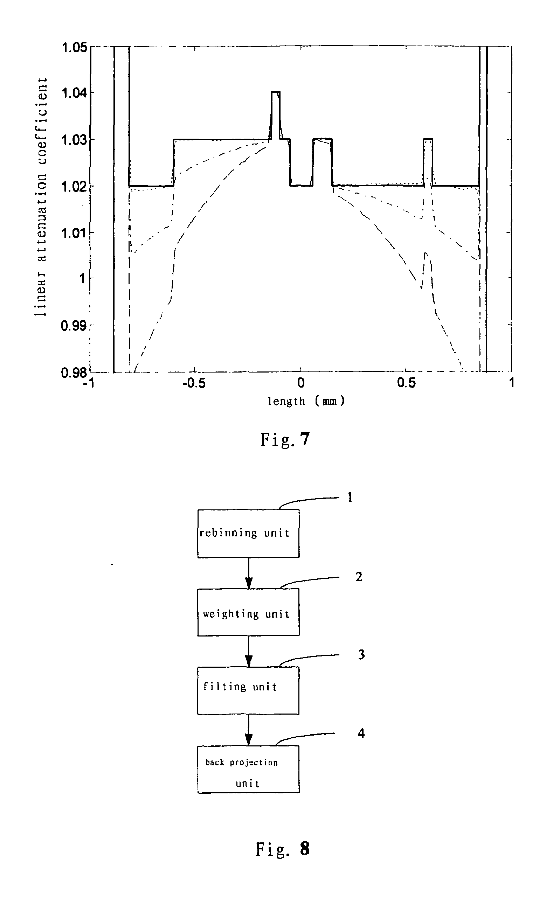

Correspondingly, as shown in Fig. 8, the apparatus for CT image reconstruction of the present invention comprises:

rebinning unit 1 configured for selecting projection data of the same height on a curve having a curvature approximate to that of the scanning circular orbit;
weighting unit 2 configured for implementing weighting processing on the selected projection data;
filtering unit 3 configured for filtering the weighting processed projection data along the horizontal direction;
back projection unit 4 configured for implementing three-dimensional back projection on the filtered projection data along the direction of ray.

Preferably, said rebinning unit 1 is configured to select projection data according to the following formula:

$$P^{C-FDK}(\theta,t,c) = P(\theta - \arcsin\frac{t}{R}, \frac{tR}{\sqrt{R^2 - t^2}}, \frac{c \cdot R^2}{2(R^2 - t^2) - R\sqrt{R^2 - t^2}})$$

wherein, $P^{C\text{-}FDK}(\theta,t,c)$ indicates the selected projection data; $\theta$ indicates the projection direction; $t$ indicates the distance between parallel fan beams; $c$ indicates the angular sampling interval in the direction of Z axis; R indicates the radius of the circular orbit.

Preferably, said weighting unit 2 is configured to process the selected projection data according to the following formula:

$$\tilde{P}^{C-FDK}(\theta,t,c) = \frac{2\sqrt{R^2 - t^2} - R}{\sqrt{5R^2 - 4t^2 - 4R\sqrt{R^2 - t^2} + c^2}} \cdot P^{C-FDK}(\theta,t,c)$$

wherein, $\tilde{P}^{C\text{-}FDK}(\theta,t,c)$ indicates the weighting processed projection data.

Preferably, said filtering unit 3 is configured to implement filtering according to the following formula:

$$g^{C-FDK}(\theta,t,c) = \tilde{P}^{C-FDK}(\theta,t,c) \otimes h(t)$$

$$= \int_{-c_0}^{c_0} \tilde{P}^{C-FDK}(\theta,t,c) \cdot h(t-t')dt'$$

wherein, $g^{C\text{-}FDK}(\theta,t,c)$ indicates the filtered projection data; $\otimes$ indicates the convolution; $h(t)$ indicates the filtering function.

Preferably, said back projection unit 4 is configured to implement three-dimensional back projection according to the following formula:

$$f^{C-FDK}(x,y,z) = \int_0^{2\pi} g^{C-FDK}\big(\theta, t(x,y,\theta), c(x,y,z,\theta)\big)d\theta$$

wherein, $f^{C-FDK}(x,y,z)$ indicates the reconstructed image in the direction of X axis, Y axis and Z axis.

Because the technical features comprised in the apparatus for CT image reconstruction of the present invention correspond to the technical features comprised in the method for CT reconstruction of the present invention, thus, the technical solution of the apparatus for CT image reconstruction of the present invention will not be described in detail.

The inventor of the application makes numerical simulative experiment using the three-dimensional Shepp-Logan head model, and makes experimental comparison with FDK method and T-FDK method to verify the technical solutions of the present invention. In the numerical simulative experiment, the three-dimensional head model is limited within a lmm globe, the center of the model is the rotation center of CT scanning, the distance from the X-ray source to the rotation center is 4mm, the distance from the X-ray source to the detector is 8mm, the size of the flat panel detector is 4mm×4mm, the number of the detecting units is 256×256, 360 cone-beam projections are acquired uniformly in angle within the range of 360 degree, then a three-dimensional CT image is reconstructed. According to the geometric definition above, it can be calculated that in the experiment, the largest cone angle of the cone-beam X-ray is 14 degree, that is, the X-ray cone angle range of this experiment is ±14˚. With the circular-orbit cone-beam projection data under said above-described scanning condition, three-dimensional CT images are reconstructed respectively employing FDK method, T-FDK method and C-FDK method of the present invention.

Fig. 6(a) is an accurate image of the Shepp-logan head model in a vertical section, said vertical section is selected parallel to the x-z plane and where the three-dimensional head model is at the location y=-0.25; Fig. 6(b) is reconstruction result obtained by employing FDK method; Fig. 6(c) is reconstruction result obtained by employing T-FDK method; Fig. 6(d) is reconstruction result obtained by employing C-FDK method of the present invention.

It can be seen from each of the reconstructed images obtained from above that the C-FDK method of the present invention can nicely reconstruct an image of the three-dimensional head model under the condition of ±14˚, it overcomes the difficult problem of cone beam artifact which is ubiquitous in large-cone-angle circular-orbit CT reconstruction in the existing methods, and nicely solves the problem of large-cone-angle circular-orbit CT image reconstruction.

In order to more accurately analyze the accuracy of the numerical value of the reconstruction result, Fig. 7 selects a section line taken along the vertical center of the section of Fig. 6, wherein the horizontal coordinate indicates the length coordinate of the points on the section line, the vertical coordinate indicates the linear attenuation coefficient of the points on the section line, the long dashed line indicates the reconstruction result of FDK method, the dash-dotted line indicates the reconstruction result of T-FDK method, the short dashed line indicates the reconstruction result of C-FDK method of the present invention, the real line indicates the accurate numerical value of the head model. It can be seen more clearly from the section line that when the cone angle increases, the reconstruction numerical values of the existing FDK and T-FDK methods show a rapidly decreasing trend, and go farther and farther from the accurate value of the model, while the C-FDK method of the present invention still can comparatively accurately reconstruct the accurate value of the original model even if it is within the cone angle range of ±14˚, and fundamentally solves the difficult problem of large-cone-angle circular-orbit CT image reconstruction.

Lastly, it needs to particularly state that the core of the C-FDK method of the present invention lies in implementing filtering on projection data along the direction that the virtual detector is concave along the midline, in the derivation processes above, the invention is to rebin X-ray and the projection of the same height on *OC* curve in Fig. 2 into C-FDK data $P^{C-FDK}(\theta,t,c)$ of the same height c. Where *OC* curve is a segment of arc having the same curvature as the circular scanning orbit, here the selection for the *OC* curve is not the one and only, variation within a small range may be made around the curvature, which also should be within the range of the claims of the patent invention.

Although the embodiments of the invention have been described in combination with the figures, yet those skilled in the art may implement various variation, modification and equivalent substitution to the invention without departing from the spirit and scope of the invention. Such variation, modification and equivalent substitution are intended to fall within the spirit and scope defined by the appended claims.

**Claims**

**1.** A method for CT image reconstruction, **characterized in that**, comprising steps of:

selecting projection data of the same height on a curve having a curvature approximate to that of the scanning circular orbit;
implementing weighting processing on the selected projection data;
filtering the weighting processed projection data along the horizontal direction;
implementing three-dimensional back projection on the filtered projection data along the direction of ray.

2. The method for CT image reconstruction according to claim 1, **characterized in that**, said step of selecting projection data of the same height on a curve having a curvature approximate to that of the scanning circular orbit comprises selecting projection data according to the following formula:

$$P^{C-FDK}(\theta,t,c) = P(\theta - \arcsin\frac{t}{R}, \frac{tR}{\sqrt{R^2-t^2}}, \frac{c \cdot R^2}{2(R^2-t^2)-R\sqrt{R^2-t^2}})$$

wherein, $P^{C-FDK}(\theta,t,c)$ indicates the selected projection data; $\theta$ indicates the projection direction; $t$ indicates the distance between parallel fan beams; $c$ indicates the angular sampling interval in the direction of Z axis; R indicates the radius of the circular orbit.

3. The method for CT image reconstruction according to claim 2, **characterized in that**, said step of implementing weighting processing on the selected projection data comprises processing the selected projection data according to the following formula:

$$\tilde{P}^{C-FDK}(\theta,t,c) = \frac{2\sqrt{R^2-t^2}-R}{\sqrt{5R^2-4t^2-4R\sqrt{R^2-t^2}+c^2}} \cdot P^{C-FDK}(\theta,t,c)$$

wherein, $\tilde{P}^{C-FDK}(\theta,t,c)$ indicates the weighting processed projection data.

4. The method for CT image reconstruction according to claim 3, **characterized in that**, said step of filtering the weighting processed projection data along the horizontal direction comprises filtering according to the following formula:

$$g^{C-FDK}(\theta,t,c) = \tilde{P}^{C-FDK}(\theta,t,c) \otimes h(t)$$
$$= \int_{-c_0}^{c_0} \tilde{P}^{C-FDK}(\theta,t,c) \cdot h(t-t')dt'$$

wherein, $g^{C-FDK}(\theta,t,c)$ indicates the filtered projection data; $\otimes$ indicates the convolution; $h(t)$ indicates the filtering function.

5. The method for CT image reconstruction according to claim 4, **characterized in that**, said step of implementing three-dimensional back projection on the filtered projection data along the direction of ray comprises implementing three-dimensional back projection according to the following formula:

$$f^{C-FDK}(x,y,z) = \int_0^{2\pi} g^{C-FDK}\big(\theta,t(x,y,\theta),c(x,y,z,\theta)\big)d\theta$$

wherein, $f^{C-FDK}(x,y,z)$ indicates the reconstructed image in the direction of X axis, Y axis and Z axis.

6. A apparatus for CT image reconstruction, **characterized in that** comprising:

rebinning unit configured for selecting projection data of the same height on a curve having a curvature approximate to that of the scanning circular orbit;

weighting unit configured for implementing weighting processing on the selected projection data;

filtering unit configured for filtering the weighting processed projection data;

back projection unit configured for implementing three-dimensional back projection on the filtered projection data along the direction of ray.

7. The apparatus for CT image reconstruction according to claim 6, **characterized in that**, said rebinning unit is configured to select projection data according to the following formula:

$$P^{C-FDK}(\theta,t,c) = P(\theta - \arcsin\frac{t}{R}, \frac{tR}{\sqrt{R^2-t^2}}, \frac{c \cdot R^2}{2(R^2-t^2)-R\sqrt{R^2-t^2}})$$

wherein, $P^{C-FDK}(\theta,t,c)$ indicates the selected projection data; $\theta$ indicates the projection direction; $t$ indicates the distance between parallel fan beams; $c$ indicates the angular sampling interval in the direction of Z axis; R indicates the radius of the circular orbit.

8. The apparatus for CT image reconstruction according to claim 7, **characterized in that**, said weighting unit is configured to process the selected projection data according to the following formula:

$$\tilde{P}^{C-FDK}(\theta,t,c) = \frac{2\sqrt{R^2-t^2}-R}{\sqrt{5R^2-4t^2-4R\sqrt{R^2-t^2}+c^2}} \cdot P^{C-FDK}(\theta,t,c)$$

wherein, $\tilde{P}^{C-FDK}(\theta,t,c)$ indicates the weighting processed projection data.

9. The apparatus for CT image reconstruction according to claim 8, **characterized in that**, said filtering unit is configured to implement one-dimensional ramp filtering according to the following formula:

$$g^{C-FDK}(\theta,t,c) = \tilde{P}^{C-FDK}(\theta,t,c) \otimes h(t)$$

$$= \int_{-c_0}^{c_0} \tilde{P}^{C-FDK}(\theta,t,c) \cdot h(t-t')dt'$$

wherein, $g^{C-FDK}(\theta,t,c)$ indicates the filtered projection data; $\otimes$ indicates the convolution; $h(t)$ indicates the filtering function.

10. The apparatus for CT image reconstruction according to claim 9, **characterized in that**, said back projection unit is configured to implement three-dimensional back projection according to the following formula:

$$f^{C-FDK}(x,y,z) = \int_{0}^{2\pi} g^{C-FDK}\big(\theta,t(x,y,\theta),c(x,y,z,\theta)\big)d\theta$$

wherein, $f^{C-FDK}(x,y,z)$ indicates the reconstructed image in the direction of X axis, Y axis and Z axis.

Fig. 1 ( a )

Fig. 1 ( b )

Fig. 1 ( c )

$$P^{C\text{-}FDK}(\theta,t,c)$$

Fig. **1** ( **d** )

Fig. **2**

Fig. 3

1) selecting project data of the same heigh on the curve having curvature approximate to that of the scanning circular orbit

2) implementing weighting processing on the selected projection data

3) filtering the weighting processed projection data along the horizontal direction

4) implementing three-dimensional back projection on the filtered projection data along the direction of ray

Fig. 4

Fig. **5 ( a )**

Fig. **5 ( b )**

Fig. **5 ( c )**

Fig. **6 ( a )**

Fig. **6 ( b )**

Fig. 6 ( c )

Fig. 6 ( d )

Fig. 7

Fig. 8

<table>
<tr><td colspan="2"><div align="center"><strong>INTERNATIONAL SEARCH REPORT</strong></div></td><td>International application No.<br>PCT/CN2011/000830</td></tr>
</table>

| | International application No. |
|---|---|
| **INTERNATIONAL SEARCH REPORT** | PCT/CN2011/000830 |

**A. CLASSIFICATION OF SUBJECT MATTER**

G06T 11/00 (2006.01)i

According to International Patent Classification (IPC) or to both national classification and IPC

**B. FIELDS SEARCHED**

Minimum documentation searched (classification system followed by classification symbols)

IPC: G06T 11/-, G06T 7/-

Documentation searched other than minimum documentation to the extent that such documents are included in the fields searched

Electronic data base consulted during the international search (name of data base and, where practicable, search terms used)

Database: CNABS,VEN,CNTXT,USTXT,CNKI   Keyword: computed, tomography, projection, filter+, reconstruction, weight+, circular, scan, trajectory, artifact, rebinn+, rebind

**C. DOCUMENTS CONSIDERED TO BE RELEVANT**

| Category* | Citation of document, with indication, where appropriate, of the relevant passages | Relevant to claim No. |
|---|---|---|
| A | CN101404088A(Huazhong University of Science & Technology) 08 Apr. 2009 (08.04.2009) the whole document | 1-10 |
| A | US2008013676A1(KONINKLIJKE PHILIPS ELECTRONICS N.V.) 17 Jan. 2008 (17.01.2008) the whole document | 1-10 |
| A | US2003161444A1(Katsevich A) 28 Aug. 2003 (28.08.2003) the whole document | 1-10 |
| A | ZHANG Jian et al. Review of recent development in FDK reconstruction algorithms for 3D cone beam CT. Chinese Journal of Stereology and Image Analysis. June 2005, vol. 10, No. 2, pages 116-121, ISSN 1007-1482 | 1-10 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 07 Jul. 2011 (07.07.2011) | **28 Jul. 2011 (28.07.2011)** |
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><div align="center">LI Fang</div><br>Telephone No. (86-10)62412078 |

Form PCT/ISA /210 (second sheet) (July 2009)

## INTERNATIONAL SEARCH REPORT
Information on patent family members

| International application No. |
| --- |
| PCT/CN2011/000830 |

| Patent Documents referred in the Report | Publication Date | Patent Family | Publication Date |
| --- | --- | --- | --- |
| CN101404088A | 08.04.2009 | None | |
| US 2008013676 A1 | 17.01.2008 | WO 2005121836 A1 | 22.12.2005 |
| | | EP 1759225B1 B1 | 01.12.2010 |
| | | JP 2008501465 T | 24.01.2008 |
| | | EP 1759225 A1 | 07.03.2007 |
| | | US 7430270 B2 | 30.09.2008 |
| | | DE 602005025118 E | 13.01.2011 |
| US 2003161444 A1 | 28.08.2003 | AU 2003226176 A1 | 11.11.2003 |
| | | WO 03094736 A1 | 20.11.2003 |
| | | KR 20040111599 A | 31.12.2004 |
| | | US 6771733 B2 | 03.08.2004 |
| | | JP 2005524468 T | 18.08.2005 |
| | | EP 1509134 A1 | 02.03.2005 |

Form PCT/ISA /210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Feldkamp L.A. ; L.C.Davis ; J.W.Kress.** Practical cone-beam algorithm [J]. *Journal of the Optical Society of America,* 1984, 612-619